# EUROPEAN PATENT SPECIFICATION

(11) **EP 1 914 968 B1**
(45) Date of publication and mention of the grant of the patent: **25.01.2012**
(21) Application number: 07016088.2
(22) Date of filing: 16.08.2007
(51) Int. Cl.: H04M 1/725, G04G 15/00, G04G 5/00

(54) **Clock operation method and module for mobile terminal**
Taktbetriebsverfahren und -modul für mobile Endgeräte
Procédé d'opération d'une horloge et module d'horloge pour terminal mobile

(30) Priority: 12.10.2006 KR 20060099354
(43) Date of publication of application: 23.04.2008
(73) Proprietor: Samsung Electronics Co., Ltd., Yeongtong-gu Suwon-si, Gyeonggi-do (KR)
(72) Inventor: Chu, Se-Youp, Suwon-si Gyeonggi-do (KR)
(74) Representative: Lang, Johannes

(56) References cited:
- EP-A- 1 460 509
- US-A- 5 051 967
- US-A- 5 386 398
- US-B1- 6 393 263

## Description

### BACKGROUND OF THE INVENTION

### 1. Field of the Invention

The present invention relates generally to a mobile terminal and, more particularly, to a clock operation method and module for a mobile terminal that enable the user to create and reset an offset clock for clock personalization.

### 2. Description of the Related Art

A mobile terminal generally refers to a portable terminal device that can support wireless communication and perform various functions using application programs. A mobile communication terminal, personal digital assistant, smart phone, International Mobile Telecommunications-2000 terminal, and wireless local area network terminal are examples of a mobile terminal.

An advanced mobile terminal can support a variety of functions related to data exchange such as access to Internet, and multimedia processing such as audio file laying and movie viewing.

In addition to the current time, various time values are necessary to support such diverse functions. A mobile terminal includes a real time clock (RTC) as an integrated circuit chip to keep track of the current time. The RTC generates a clock signal of a preset frequency to provide the mobile terminal with time values in hours, minutes and seconds, and date values in days, weeks, months, and years. Additionally, the RTC enables an alarm feature generating an alarm sound at a preset time, and a timer feature measuring the passage of time. A user of the mobile terminal can set or reset the RTC to produce desired types of time and date values.

US 6393263 (B1) discloses a mobile communications terminal and system in which a time displayed by the terminal can be corrected based on a reference time, while an intentional offset time can be established at the terminal without modification of the reference time itself. When a reference time (Tst) is 12:00, a user may purposely make a setting of, for example, 12:05 as a present time (RTC) generated by a time-generating portion.

US 5386398 (A) discloses an apparatus for displaying data such as time or weight samples, comprising a data generator means, a pseudorandom number generator, a function generator for generating modified data samples functionally related to the original data samples and the pseudorandom numbers, and display means for displaying the modified data.

US 5051967 (A) discloses a microprocessor based timepiece capable of displaying a plurality of time information having one display that continuously shows a time that is fast and varies within a user-specified range, and a second display that is momentarily activated to show the actual time.

However, a conventional mobile terminal does not provide a personalized clock that can be freely created and reset as necessary. That is, although the conventional mobile terminal can display the current time and current local times around the world using an RTC, it does not provide a separate clock that keeps time, for example, ten minutes ahead of the current time in a user settable manner.

### SUMMARY OF THE INVENTION

The present invention provides a clock operation method and apparatus for a mobile terminal that provides the user with a personalized clock that can be freely created and set as necessary.

In accordance with an exemplary embodiment of the present invention, there is provided a clock operation method for a mobile terminal according to claim 1. An aspect includes:
inputting a clock setting request while at least one offset clock created in advance is in operation on the basis of a reference time signal from an internal clock; if the input clock setting request is a clock creation request, performing the steps of
   - receiving an input time gap value, and
   - generating a time offset value using the reference time signal and the received input time gap value;
creating a new offset clock using the generated time offset value; and displaying the time of the newly created offset clock.

In accordance with another exemplary embodiment of the present invention, there is provided a clock operation module for a mobile terminal according to claim 15. Another aspect includes: a reference clock for generating a reference time signal using an internal clock; an offset data manager for managing at least one time offset value derived using the reference time signal and an input time gap value input; and an offset clock section for creating and operating at least one offset clock using the least one time offset value.

The clock operation module may further include a display unit for displaying the time of the offset clock.

### BRIEF DESCRIPTION OF THE DRAWINGS

The above and other features and advantages of the present invention will be more apparent from the following detailed description in conjunction with the accompanying drawings, in which:
- FIG. 1: illustrates a configuration of a mobile terminal having a clock operation module according to an exemplary embodiment of the present invention;
- FIG. 2: illustrates an offset data table for the mobile terminal of FIG. 1;
- FIG. 3: is a flow chart illustrating a clock operation method according to another exemplary embodiment of the present invention;
- FIGS. 4A and 4B: illustrate screen representations for time data input;
- FIG. 5A to 5B: are flow charts illustrating a clock operation method according to another exemplary embodiment of the present invention; and
- FIG. 6: illustrates a screen representation for a clock setting operation.

### DETAILED DESCRIPTION OF THE INVENTION

Hereinafter, exemplary embodiments of the present invention are described in detail with reference to the accompanying drawings. The same reference symbols identify the same or corresponding elements in the drawings. Detailed descriptions of constructions or processes known in the art may be omitted to avoid obscuring the invention in unnecessary detail.

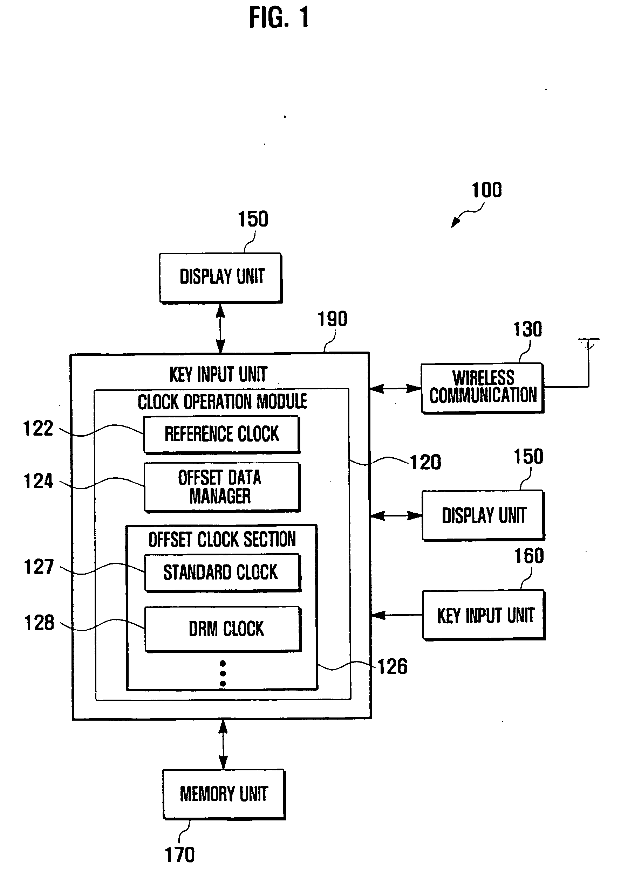

FIG. 1 illustrates a configuration of a mobile terminal having a clock operation module according to an exemplary embodiment of the present invention.

Referring to FIG. 1, the mobile terminal 100 includes a wireless communication unit 130, audio processor 140, display unit 150, key input unit 160, memory unit 170, and control unit 190. The control unit 190 includes a clock operation module 120 of the present invention.

The wireless communication unit 130 performs wireless data transmission and reception operations for the mobile terminal 100. The wireless communication unit 130 may include a radio frequency (RF) transmitter for upconverting the frequency of a signal to be transmitted and amplifying the signal, and an RF receiver for low-noise amplifying a received signal and downconverting the frequency of the received signal. The wireless communication unit 130 sends data received through a wireless channel to the control unit 190, and transmits data from the control unit 190 through a wireless channel.

The audio processor 140 may include a coder/decoder (codec). The codec may have a data codec for processing packet data and the like, and an audio codec for processing an audio signal such as a voice signal. During call processing, the audio processor 140 converts a digital audio signal from the control unit 190 into an analog signal through the audio codec to reproduce the analog signal through a speaker, and converts an analog audio signal from a microphone into a digital audio signal through the audio codec to provide the digital audio signal to the control unit 190.

The display unit 150 displays an image signal from the control unit 190 on a screen. The display unit 150 may include a panel of liquid crystal display (LCD) devices, an LCD controller, and a video memory for storing video data. If the panel has a touch screen capability, the display unit 150 can also act as an input means.

The key input unit 160 receives a key signal from the user to control operations of the mobile terminal 100, and sends the received key signal to the control unit 190.

The clock operation module 120 creates and manages various clocks in the mobile terminal 100. The clock operation module 120 includes a reference clock 122, offset data manager 124, and offset clock section 126. The offset clock section 126 includes a standard clock 127 and digital rights management (DRM) clock 128.

The reference clock 122 generates a reference time signal using an internal clock. The reference time signal is unalterable and used only inside the mobile terminal 100, and therefore a user cannot directly use the reference time signal.

The reference clock 122 preferably includes an oscillator (not shown) for generating a reference clock signal having a preset frequency, an RTC (not shown) for creating a reference time signal using the reference clock signal.

In the description, the term 'time' may refer to a date-time value including both a time value in hours, minutes and seconds, and a date value in days, weeks, months and years.

The offset data manager 124 manages offset data. When the user inputs a time gap value for creation of an offset clock, the offset data manager 124 generates a time offset value using the input time gap value and stores the generated time offset value in an offset data table (described subsequently) 200.

In the present invention, an offset clock maintains time as an offset from a time selected from the group consisting of the reference clock 122 and the standard clock 127, and can be created and removed if necessary. An offset clock can be created through inputting a time gap value, and resetting the time on the created offset clock if necessary. A plurality of offset clocks may be created and used.

The offset clock section 126 creates and manages an offset clock using a corresponding offset record stored in the offset data table. The offset clock section 126 constantly manages at least two offset clocks: the standard clock 127 and DRM clock 128.

The standard clock 127 is an offset clock for displaying the current time on the mobile terminal 100. Whereas a user can reset the time on the standard clock 127, the user cannot remove the standard clock 127 itself.

The DRM clock 128 is an offset clock for enabling utilization of a DRM content such as a time-bound content, and is not removable by the user. The DRM clock 128 has an encryption key for authentication to prevent unauthorized resetting of the DRM time. The time on the DRM clock 128 cannot be reset with ordinary key input from the user, and can only be reset through an authentication procedure performed by an authentication server (not shown). That is, if the time on the DRM clock 128 is different from that on the authentication server, the encryption key is utilized by the DRM authentication server to reset the time on the DRM clock 128.

As the standard clock 127 and DRM clock 128 are constantly utilized, they are preferably created in advance during the manufacturing process.

The offset clock section 126 can manage a plurality of offset clocks created according to a plurality of user requests, and feed the reference time signal from the reference clock 122 in real-time to the created offset clocks for displaying various types of time values. An offset clock may also be dynamically created on demand according to a time display request.

The memory unit 170 includes a program memory section and a data memory section. The program memory section stores programs for controlling the overall operation of the mobile terminal 100, and the data memory section stores data resulting from execution of the programs. In particular, the memory unit 170 stores an offset data table 200 that is used for offset clock creation and management.

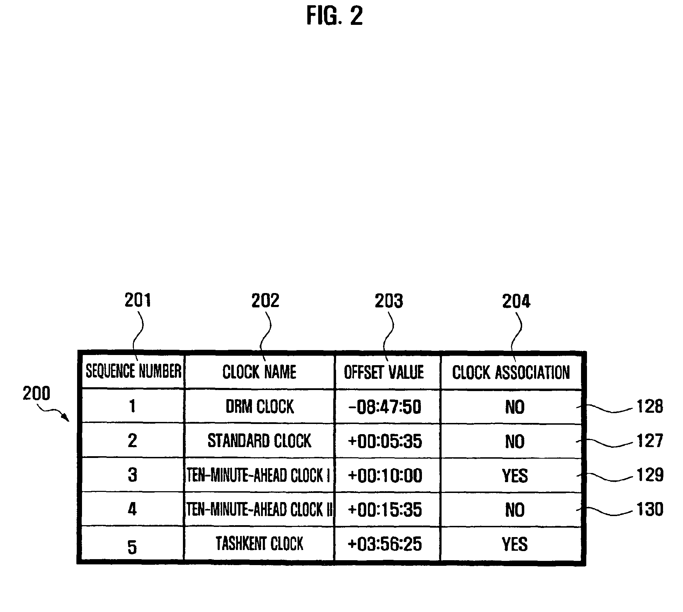

FIG. 2 illustrates an offset data table 200. The offset data table includes a plurality of offset records. An offset record includes a sequence number field, clock name field, offset value field, and clock association field.

The sequence number field 201 stores a sequence number, which is automatically set by the offset data manager 124, assigned to an offset clock.

The clock name field 202 stores a descriptive name, which is input by the user, given to the offset clock.

The offset value field 203 stores a time offset value corresponding to a time gap value input by the user. The clock association field 204 indicates which of the standard clocks 127 and the reference clock 122 is associated with the offset clock. For example, in the offset data table 200 of FIG. 2, a value of 'YES' in the clock association field 204 indicates that the time on the corresponding offset clock is associated with the time on the standard clock 127; and a value of 'NO' in the clock association field 204 indicates that the time on the corresponding offset clock is associated with the time on the reference clock 122.

If the offset clock is associated with the standard clock 127, the time offset value in the offset value field 203 is identical to the input time gap value. If the offset clock is associated with the reference clock 122, the time offset value is an offset value generated using the input time gap value. The time on the offset clock is an offset, given by the time offset value 203, from the time on one of the standard clock 127 and reference clock 122.

The control unit 190 controls operations of the mobile terminal 100 related to communication and supplementary functions. The control unit 190 controls the mobile terminal 100 on the basis of key signals from the key input unit 160 and control programs stored in the memory unit 170.

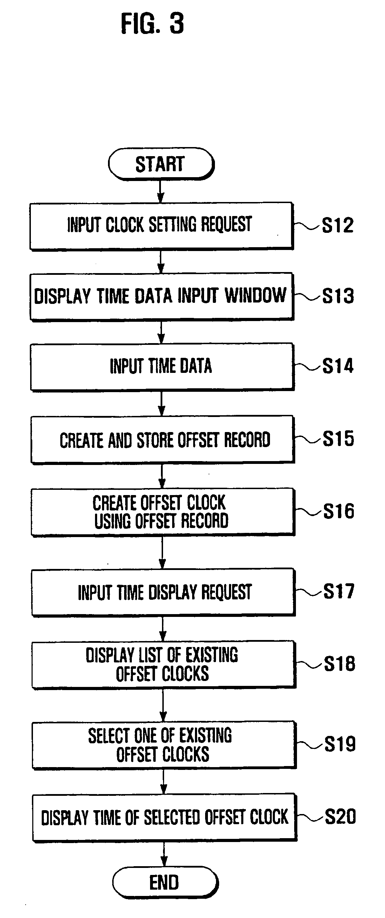

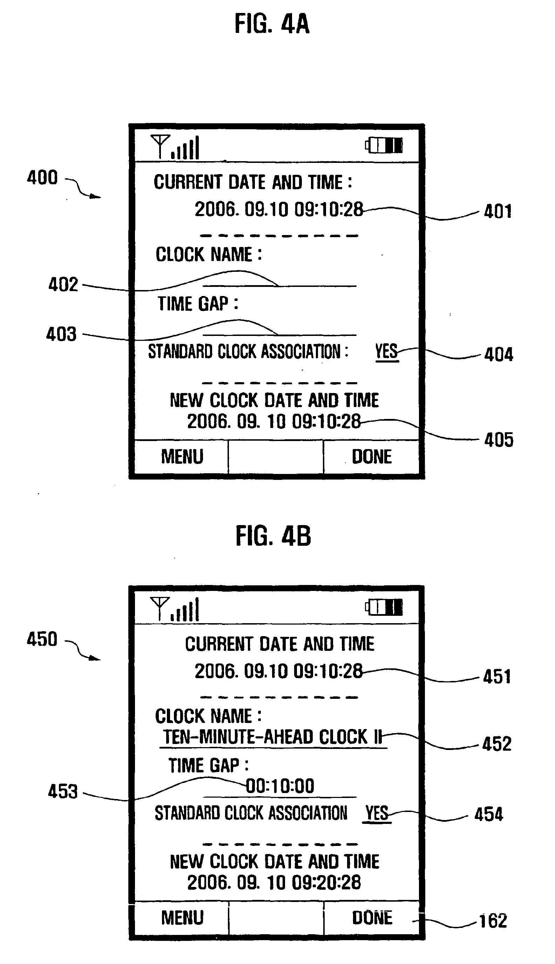

FIG. 3 is a flow chart illustrating a clock operation method according to another exemplary embodiment of the present invention. FIGS. 4A and 4B illustrate screen representations for time data input. Referring to FIGS. 1 to 4B, the clock operation method is described as follows.

When the user of the mobile terminal 100 inputs a clock setting request through the key input unit 160 or the like at step S12, the control unit 190 controls the display unit 150 to display a time data input window as illustrated in FIG. 4A at step S 13. The user inputs time data through the displayed time data input window, as illustrated in FIG. 4B at step S14.

The time data input window 400 of FIG. 4A, which corresponds to an offset record of the offset data table 200 of FIG. 2., includes fields related to current time display 401, clock name input 402, time gap input 403, associated clock selection 404, and new clock time display 405. A current date-time value based on the standard clock 127 is displayed in the corresponding field 405.

The time data input window 450 0f FIG. 4B indicates that the user inputs 'ten-minute-ahead clock II' for a clock name 452, '00:10:00' (hour:minute:second) for a time gap 453 between the time on the clock to be created and that on the standard clock 127, and 'NO' 454 for association with the reference clock 122. After user input, the control unit 190 displays a new date-time value obtained by adding the input time gap value to the current date-time value 451.

When the user completes input of the time data by selecting a 'done' icon 162 in the time data input window, the offset data manager 124 creates an offset record using the time data input by the user, and stores the created offset record in the offset data table 200 at step S 15.

In creation of the offset record, if the clock association is 'YES', the time gap value input by the user is stored, without modification, in the offset value field 203. If the clock association is 'NO', the time gap value input by the user is changed and then stored in the offset value field 203.

For example, the reference time value based on the reference clock 122 is assumed to be '00:01:00'. In FIG. 2, for the standard clock 127 associated with the second offset record, adding the time offset value of '+00:05:35' to the reference time value of '00:01:00' gives the current standard time value of '00:06:35'.

For an offset clock 'ten-minute-ahead clock I' associated with the third offset record 129, the time gap value input by the user is '00:10:00' (10 minutes), and the associated clock is the standard clock 127 ('YES' in the clock association field 204). Hence, the time gap value of '00:10:00' is copied to the corresponding offset value field 203 as the time offset value, and adding the time offset value of '+00:10:00' to the standard time value of '00:06:35' gives a time value of '00:16:35'. That is, the offset clock 'ten-minute-ahead clock I' 129 keeps time ten minutes ahead of the time on the standard clock 127. If the user resets the time on the standard clock 127, the time on the offset clock 'ten-minute-ahead clock I' 129 is also reset accordingly.

For an offset clock 'ten-minute-ahead clock II' associated with the fourth offset record 130, the time gap value input by the user is '00:10:00' (10 minutes), and the associated clock is the reference clock 122 ('NO' in the clock association field 204). The offset data manager 124 calculates an intermediate time value of '00:16:35' by adding the time gap value of '00:10:00' to the current time value of '00:06:35' based on the standard clock 127, obtains the time offset value of '+00:15:35' by calculating the difference between the intermediate time value of '00:16:35' and the reference time value of '00:01:00' based on the reference clock 122, and stores the time offset value of '+00:15:35' in the offset value field 203.

Thereafter, the offset clock section 126 creates an offset clock for each offset record in the offset data table 200 at step S16. When a new offset record is stored, a corresponding new offset clock is created.

At step S16, after creation of a new offset clock, the offset clock section 126 checks the value of the clock association field 204 in the associated offset record to set the time on the newly created offset clock.

If the value of the clock association field 204 is 'YES', the offset clock section 126 sets, to the time on the newly created offset clock, a time value that is obtained by adding the corresponding time offset value 203 to the time value of the standard clock 127. The new offset clock keeps time relative to the time on the standard clock 127. Hence, if the time on the standard clock 127 is reset, the time on the new offset clock is also reset accordingly when it is used and is nowhere saved in the memory.

If the value of the clock association field 204 is 'NO', the offset clock section 126 sets, to the time on the newly created offset clock, a time value that is obtained by adding the corresponding time offset value 203 to the time value of the reference clock 122. The new offset clock keeps time relative to the time of the reference clock 122. Hence, resetting of the time on the standard clock 127 does not affect the time on the new offset clock.

The created offset clocks are operated and managed by the offset clock section 126 according to the reference time signal from the reference clock 122.

Thereafter, when the user inputs a clock display request at step S 17, the offset clock section 126 displays a clock list of existing offset clocks at step S18. When the user selects an offset clock in the clock list at step S 19, the offset clock section 126 computes and displays the date and time based on the selected offset clock through the display unit 150 for the user at step S20.

In offset clock display, time and date values of existing offset clocks may also be displayed in a list of pairs of clock name and time-date value.

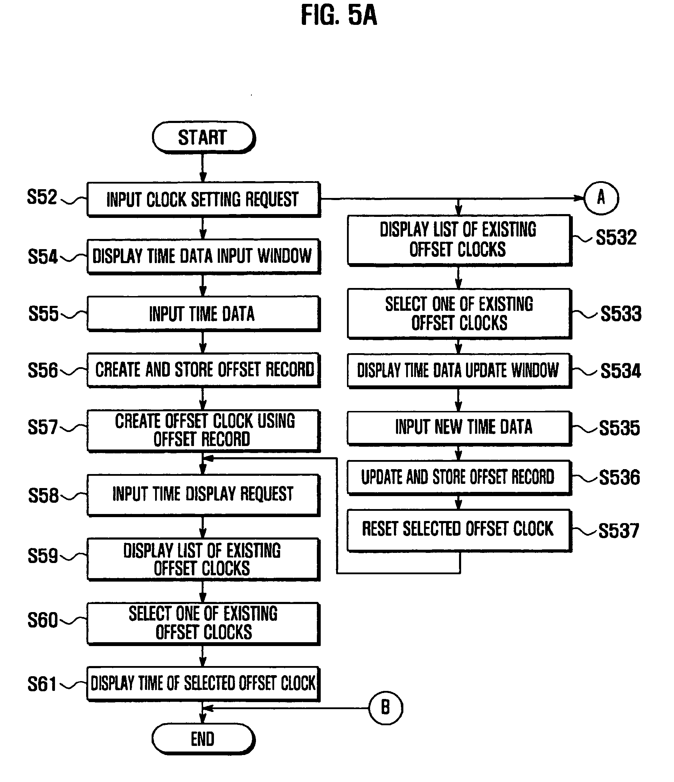

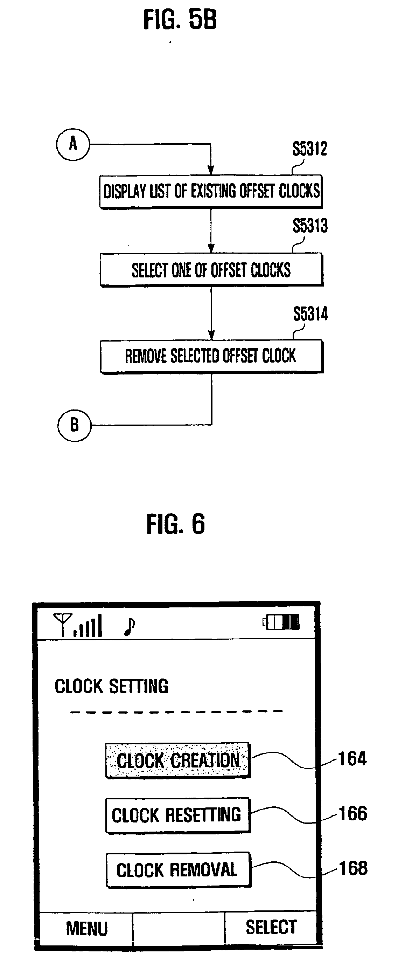

FIG. 5A to 5B are flow charts illustrating a clock operation method according to another exemplary embodiment of the present invention. FIG. 6 illustrates a screen representation for a clock setting operation. Referring to FIGS. 1, 2, 5A to 5B and 6, the clock operation of this other exemplary method is described as follows.

When the user of the mobile terminal 100 inputs a clock setting request through the key input unit 160 or the like at step S52, the control unit 190 controls the display unit 150 to display a clock setting window as illustrated in FIG. 6. The clock setting window includes menu items for clock creation 164, clock resetting 166, and clock removal 168. When the user selects one of the menu items in the clock setting window at step S52, the control unit 190 performs operations corresponding to the selected menu item.

If the clock creation menu item 164 is selected at step S52, the control unit 190 performs operations related to offset clock creation and time display. Steps S54 to S61 of FIG. 5A to 5B for offset clock creation and time display correspond to steps S 13 to S20 of FIG. 3, and a description thereof is omitted.

If the clock resetting menu item 166 is selected at step S52, the control unit 190 displays a clock list of existing offset clocks at step S532. When the user selects an offset clock in the clock list at step S533, the control unit 190 notifies the offset data manager 124 of the selected offset clock for resetting.

When the offset data manager 124 displays on the display unit 150 a time data update window using an offset record associated with the selected offset clock at step S534, the user changes data values in the time data update window at step S535 by inputting new time data.

The time data update window is identical in structure to the time data input window described previously in connection with FIG. 4B. Hence, the user can change data values related to the clock name, time gap, and associated clock of the selected offset clock.

When the user completes data change by entering the 'done' key, the offset data manager 124 updates the corresponding offset record with the changed data values at step S536.

Thereafter, the offset clock section 126 resets the selected offset clock using the updated offset record at step S537, and operates the selected offset clock according to the reference time signal from the reference clock 122.

If the clock removal menu item 168 is selected at step S5311, the control unit 190 displays a clock list of existing offset clocks at step S5312. When the user selects an offset clock to be removed in the clock list at step S5313, the offset data manager 124 deletes an offset record associated with the selected offset clock from the offset data table 200, and removes the selected offset clock through the offset clock section 126 at step S5314.

As apparent from the above description, the present invention provides a clock operation method and module for a mobile terminal that enables the user to freely create an offset clock and reset the time on the offset clock. As a result, the user can operate a plurality of personalized offset clocks, each of which dynamically keeps time relative to a reference clock.

While preferred embodiments of the present invention have been shown and described in this specification, it will be understood by those skilled in the art that various changes or modifications of the embodiments are possible without departing from the scope of the invention as defined by the appended claims. For example, although, in the description, the clock operation module is implemented as part of the control unit, it may also be implemented as a separate entity. In addition, although the description is focused upon a mobile terminal, the clock operation method and module of the present invention may also be applicable to any electronic apparatus having a digital clock.

## Claims

1. A method for operating a clock of a mobile terminal, comprising the steps of:
inputting a clock setting request by a user (S12; S52);
generating a time offset value (S 15; S56) dependent on the clock setting request by using a reference time signal from an internal clock and using a time gap value input by a user (S14; S55) while at least one offset clock created in advance is in operation on the basis of the reference time signal;
creating at least one new offset clock dependent on the clock setting request by using the generated time offset value (S16; S57);
displaying a clock list of existing offset clocks (S18; S59, S532, S5312);
selecting an offset clock in the displayed clock list (S19; S60, S533, S5313) and providing all of the following options to the user, dependent on the clock setting request (S12; S52): displaying the time of the selected offset clock (S20; S61); resetting the selected offset clock (S537); and removing the selected offset clock (S5314).

2. The method of claim 1, wherein the reference time signal is unalterable.

3. The method of claim 1 or 2, wherein the created new offset clock keeps time according to the reference time signal.

4. The method of claim 1 or 3, wherein the time of the newly created offset clock is set to a time value of the time offset value plus the time associated with the reference time signal.

5. The method of claim 1, wherein the at least one offset clock created in advance comprises a standard clock for keeping track of the current time.

6. The method of claim 5, wherein the time offset value is equal to the time gap value.

7. The method of claim 6, wherein the time of the created new offset clock is set to a time value of the time offset value plus the time on the standard clock.

8. The method of claim 1 or 5, wherein the generating a time offset value step further comprises the steps of:
displaying a time data input window (S13; S54);
inputting the time gap value through the time data input window (S14; S55); and
producing the time offset value (S15; S56) using the input time gap value.

9. The method of claim 8, further comprising the step of displaying a current time value based on the standard clock in the time data input window.

10. The method of claim 1, wherein the displaying the clock list step further comprises: inputting a time display request by a user (S 17, S58).

11. The method of claim 1, further comprising the step of whenever the input clock setting request (S12; S52) is a clock creation request, the generating a time offset value step is performed.

12. The method of claim 1, further comprising the step of performing, if the input clock setting request (S12; S52) is a clock reset request, a clock reset procedure.

13. The method of claim 12, wherein the performing a clock reset procedure further comprises the steps of:
displaying a clock list of existing offset clocks (S532);
displaying, upon selection of an offset clock to be reset from the clock list (S533), a time data update window for the selected offset clock (S534);
inputting a new time gap value for the displayed selected offset clock through the time data update window (S535);
producing a new time offset value using the input new time gap value (S536); and
resetting the time of the selected offset clock using the new time offset value (S537).

14. The method of claim 1, further comprising the step of whenever the input clock setting request is a clock deletion request, performing a clock deletion procedure, comprising the steps of:
displaying a clock list of existing offset clocks (S5312);
selecting an offset clock to be removed from the displayed clock list (S5313);
and
deleting the selected offset clock and a time offset value associated with the selected offset clock (S5314).

15. A clock operation module (120) for a mobile terminal (100), comprising:
a reference clock (122) for generating a reference time signal using an internal clock;
an offset data manager (124) for managing at least one time offset value derived using the reference time signal and a time gap value input by a user, and for selecting an offset clock;
a display unit (150) for displaying a clock list of existing offset clocks and the time of the selected offset clock; and
an offset clock section (126) for creating and operating at least one offset clock using the least one time offset value, and for providing all of the following options to the user, dependent on the clock setting request input by the user: displaying the time of the selected offset clock; resetting the selected offset clock; and removing the selected offset clock.

16. The clock operation module (120) of claim 15, wherein the reference time signal from the reference clock (122) is unalterable.

17. The clock operation module (120) of claim 15, wherein the offset clock section (126) manages at least one offset clock in constant operation.

18. The clock operation module (120) of claim 17, wherein the at least one offset clock in constant operation comprises a standard clock (127) for keeping track of the current time.

19. The clock operation module (120) of claim 17, wherein the at least one offset clock in constant operation comprises a clock for digital rights management.

20. The clock operation module (120) of claim 19, wherein the digital rights management clock has an internal encryption key for authentication, and is resettable only when an externally provided encryption key coincides with the internal encryption key.

## Patentansprüche

1. Verfahren zum Betreiben einer Uhrzeit eines mobilen Endgeräts, das die Schritte aufweist:
Eingeben einer Uhrzeitsetzanforderung durch einen Benutzer (S12; S52);
Erzeugen eines Zeitverschiebungswertes (S15; S56), der von der Uhrzeitsetzanforderung abhängt unter Verwendung eines Referenzzeitsignals von einer internen Uhrzeit und unter Verwendung eines Zeitabstandswerts, der durch einen Benutzer (S14; S55) eingegeben wird, während zumindest eine vorher erzeugte Uhrzeitverschiebung auf der Basis des Referenzzeitsignals in Betrieb ist;
Erzeugen zumindest einer neuen Uhrzeitverschiebung, die von der Uhrzeitsetzanforderung unter Verwendung des erzeugten Zeitverschiebungswertes (S16; S57) abhängt;
Anzeigen einer Uhrzeitliste von existierenden Uhrzeitverschiebungen (S18; S59, S532, S5312);
Auswählen einer Uhrzeitverschiebung in der angezeigten Uhrzeitliste (S19 ; S60, S533, S5313) und Bereitstellen aller der folgenden Optionen an den Benutzer, abhängig von der Uhrzeitsetzanforderung (S12; S52): Anzeigen der Zeit der ausgewählten Uhrzeitverschiebung (S20; S61); Zurücksetzen der ausgewählten Uhrzeitverschiebung (S537); und Entfernen der ausgewählten Uhrzeitverschiebung (S5314).

2. Verfahren nach Anspruch 1, wobei das Referenzzeitsignal nicht änderbar ist.

3. Verfahren nach Anspruch 1 oder 2, wobei die erzeugte neue Uhrzeitverschiebung die Zeit gemäß dem Referenzzeitsignal einhält.

4. Verfahren nach Anspruch 1 oder 3, wobei die Zeit der neuesten erzeugten Uhrzeitverschiebung eingestellt wird auf einen Zeitwert des Zeitverschiebungswerts plus die Zeit, die mit dem Referenzzeitsignal assoziiert ist.

5. Verfahren nach Anspruch 1, wobei die zumindest eine vorher erzeugte Uhrzeitverschiebung eine Standarduhrzeit aufweist zum Verfolgen der aktuellen Zeit.

6. Verfahren nach Anspruch 5, wobei der Zeitverschiebungswert gleich dem Zeitabstandwert ist.

7. Verfahren nach Anspruch 6, wobei die Zeit der erzeugten neuen Uhrzeitverschiebung auf einen Zeitwert des Zeitverschiebungswertes plus die Zeit auf der Standarduhrzeit eingestellt wird.

8. Verfahren nach Anspruch 1 oder 5, wobei der Schritt des Erzeugens eines Zeitverschiebungswertes weiterhin die Schritte aufweist:
Anzeigen eines Zeitdaten-Eingabefensters (S13; S54);
Eingeben des Zeitabstandswerts durch das Zeitdaten-Eingabefenster (S14; S55); und
Erzeugen des Zeitverschiebungswertes (S15; S56) unter Verwendung des eingegebenen Zeitabstandswerts.

9. Verfahren nach Anspruch 8, weiterhin aufweisend den Schritt eines Anzeigens eines gegenwärtigen Zeitwerts, der auf der Standarduhrzeit in dem Zeitdaten-Eingabefenster basiert.

10. Verfahren nach Anspruch 1, wobei der Schritt des Anzeigens der Uhrzeitliste weiterhin aufweist: Eingeben einer Zeitanzeigeanforderung durch einen Benutzer (S17; S58).

11. Verfahren nach Anspruch 1, weiterhin aufweisend den Schritt, dass jedes Mal, wenn die eingegebene Uhrzeitsetzanforderung (S12; S52) eine Uhrzeiterzeugungsanforderung ist, der Schritt eines Erzeugens eines Zeitverschiebungswertes ausgeführt wird.

12. Verfahren nach Anspruch 1, weiterhin aufweisend den Schritt eines Ausführens einer Uhrzeitrücksetz-Prozedur, wenn die eingegebene Uhrzeitsetzanforderung (S12; S52) eine Uhrzeitrücksetzanforderung ist.

13. Verfahren nach Anspruch 12, wobei das Ausführen einer Uhrzeitrücksetz-Prozedur weiterhin die Schritte aufweist:
Anzeigen einer Uhrzeitliste von existierenden Uhrzeitverschiebungen (S532);
Anzeigen eines Zeitdaten-Aktualisierungsfensters für die ausgewählte Uhrzeitverschiebung (S534) nach einem Auswählen einer zurück zu setzenden Uhrzeitverschiebung aus der Uhrzeitliste (S533);
Eingeben eines neuen Zeitabstandswerts für die angezeigte ausgewählte Uhrzeitverschiebung durch das Zeitdaten-Aktualisierungsfenster (S535);
Erzeugen eines neuen Zeitverschiebungswertes unter Verwendung des eingegebenen neuen Zeitabstandswerts (S536); und
Zurücksetzen der Zeit der ausgewählten Uhrzeitverschiebung unter Verwendung des neuen Zeitverschiebungswertes (S₅₃₇).

14. Verfahren nach Anspruch 1, weiterhin aufweisend den Schritt eines Ausführens einer Uhrzeitlöschen-Prozedur, jedes Mal, wenn die eingegebene Uhrzeitsetzanfrage eine Uhrzeitlöschen-Anfrage ist, aufweisend die Schritte:
Anzeigen einer Uhrzeitliste von existierenden Uhrzeitverschiebungen (S5312);
Auswählen einer zu entfernenden Uhrzeitverschiebung aus der angezeigten Uhrzeitliste (S5313); und
Löschen der ausgewählten Uhrzeitverschiebung und eines Zeitverschiebungswertes, der mit der ausgewählten Uhrzeitverschiebung assoziiert ist (S5314).

15. Uhrzeitbetriebsmodul (120) für ein mobiles Endgerät (100), aufweisend:
eine Referenzuhrzeit (122) zum Erzeugen eines Referenzzeitsignals unter Verwendung einer internen Uhrzeit;
einen Verschiebungsdaten-Verwalter (124) zum Verwalten von mindestens einem Zeitverschiebungswert, der abgeleitet wird unter Verwendung des Referenzzeitsignals und eines durch einen Benutzer eingegebenen Zeitabstandswerts, und zum Auswählen einer Uhrzeitverschiebung;
eine Anzeigeeinheit (150) zum Anzeigen einer Uhrzeitliste von existierenden Uhrzeitverschiebungen und der Zeit der ausgewählten Uhrzeitverschiebung; und
eine Uhrzeitverschiebungs-Sektion (126) zum Erzeugen und
Betreiben zumindest einer Uhrzeitverschiebung unter Verwendung des mindestens einen Zeitverschiebungswertes, und
zum Bereitstellen aller der folgenden Optionen an den Benutzer,
abhängig von der durch den Benutzer eingegebenen Uhrzeitsetzanfrage: Anzeigen der Zeit der ausgewählten Uhrzeitverschiebung; Zurücksetzen der ausgewählten Uhrzeitverschiebung; und Entfernen der ausgewählten Uhrzeitverschiebung.

16. Uhrzeitbetriebsmodul (120) nach Anspruch 15, wobei das Referenzzeitsignal von der Referenzuhrzeit (122) nicht änderbar ist.

17. Uhrzeitbetriebsmodul (120) nach Anspruch 15, wobei die Uhrzeitverschiebungs-Sektion (126) zumindest eine Uhrzeitverschiebung in einem konstanten Betrieb verwaltet.

18. Uhrzeitbetriebsmodul (120) nach Anspruch 17, wobei die mindestens eine Uhrzeitverschiebung in einem konstanten Betrieb eine Standarduhrzeit (127) zum Verfolgen der aktuellen Zeit aufweist.

19. Uhrzeitbetriebsmodul (120) nach Anspruch 17, wobei die mindestens eine Uhrzeitverschiebung in konstantem Betrieb eine Uhrzeit zur Verwaltung von digitalen Rechten aufweist.

20. Uhrzeitbetriebsmodul (120) nach Anspruch 19, wobei die Uhrzeit der digitalen Rechteverwaltung einen internen Verschlüsselungs-Schlüssel zur Authentifizierung aufweist, und der nur zurücksetzbar ist, wenn ein extern bereitgestellter Verschlüsselungs-Schlüssel mit dem internen Verschlüsselungs-Schlüssel übereinstimmt.

## Revendications

1. Un procédé de mise en oeuvre d'une horloge d'un terminal mobile, comprenant les étapes suivantes :
introduction d'une requête de réglage d'horloge par un utilisateur (S12 ; S52) ;
génération d'une valeur de décalage de temps (S15 ; S56) selon la requête de réglage d'horloge par utilisation d'un signal de temps de référence provenant d'une horloge interne et utilisation d'une valeur d'écart de temps par un utilisateur (S14 ; S55) pendant qu'au moins une horloge décalée créée à l'avance est en oeuvre sur la base du signal de temps de référence ;
création d'au moins une nouvelle horloge décalée selon la requête de réglage d'horloge par utilisation de la valeur de décalage de temps générée (S16 ; S57) ;
affichage d'une liste d'horloges des horloges décalées existantes (S18 ; S59, S532, S5312) ;
sélection d'une horloge décalée dans la liste d'horloges affichée (S19 ; S60, S533, S5313) et délivrance à l'utilisateur de toutes les options suivantes, selon la requête de réglage d'horloge (S12 ; S52) : affichage du temps de l'horloge décalée sélectionnée (S20 ; S61) ; recalage de l'horloge décalée sélectionnée (S537) ; et suppression de l'horloge décalée sélectionnée (S5314).

2. Le procédé de la revendication 1, dans lequel le signal de temps de référence est inaltérable.

3. Le procédé de la revendication 1 ou 2, dans lequel la nouvelle horloge décalée créée conserve le temps en fonction du signal de temps de référence.

4. Le procédé de la revendication 1 ou 3, dans lequel le temps de l'horloge décalée nouvellement créée est établi à une valeur de temps de la valeur de décalage de temps plus le temps associé au signal de temps de référence.

5. Le procédé de la revendication 1, dans lequel la au moins une horloge décalée créée à l'avance comprend une horloge standard pour garder une trace du temps courant.

6. Le procédé de la revendication 5, dans lequel la valeur de décalage de temps est égale à la valeur de l'écart de temps.

7. Le procédé de la revendication 6, dans lequel le temps de la nouvelle horloge décalée créée est établi à une valeur de temps de la valeur de décalage de temps plus le temps sur l'horloge standard.

8. Le procédé de la revendication 1 ou 5, dans lequel l'étape de génération d'une valeur de décalage de temps comprend en outre les étapes suivantes :
affichage d'une fenêtre d'introduction de données de temps (S13 ; S54) ;
introduction de la valeur d'écart de temps par l'intermédiaire de la fenêtre d'introduction de données de temps (S14 ; S55) ; et
production de la valeur de décalage de temps (S15 ; S56) par utilisation de la valeur d'écart de temps introduite.

9. Le procédé de la revendication 8, comprenant en outre l'étape d'affichage d'une valeur de temps courante sur la base de l'horloge standard dans la fenêtre d'introduction de données de temps.

10. Le procédé de la revendication 1, dans lequel l'étape d'affichage de la liste d'horloges comprend en outre : l'introduction d'une requête d'affichage de temps par un utilisateur (S17, S58).

11. Le procédé de la revendication 1, comprenant en outre l'étape selon laquelle la génération d'une étape de valeur de décalage de temps est exécutée chaque fois que la requête d'établissement d'horloge introduite (S12 ; S52) est une requête de création d'horloge.

12. Le procédé de la revendication 1, comprenant en outre l'étape d'exécution d'une procédure de recalage d'horloge, si la requête d'établissement d'horloge introduite (S12 ; S52) est une requête de recalage d'horloge,.

13. Le procédé de la revendication 12, dans lequel l'exécution d'une procédure de recalage d'horloge comprend en outre les étapes suivantes :
affichage d'une liste d'horloges des horloges décalées existantes (S532) ;
sur sélection dans la liste d'horloges (S533) d'une horloge décalée à recaler, affichage d'une fenêtre de mise à jour de données de temps pour l'horloge décalée sélectionnée (S534) ;
introduction d'une nouvelle valeur d'écart de temps pour l'horloge décalée sélectionnée affichée par l'intermédiaire de la fenêtre de mise à jour de données de temps (S535) ;
production d'une nouvelle valeur de décalage de temps par utilisation de la nouvelle valeur d'écart de temps introduite (S536) ; et
recalage du temps de l'horloge décalée sélectionnée par utilisation de la nouvelle valeur de décalage de temps (S537).

14. Le procédé de la revendication 1, comprenant en outre, chaque fois que la requête de réglage d'horloge introduite est une requête de suppression d'horloge, l'étape d'exécution d'une procédure de suppression d'horloge comprenant les étapes suivantes :
affichage d'une liste d'horloges des horloges décalées existantes (S5312) ;
sélection dans la liste d'horloges affichée (S5313) d'une horloge décalée à supprimer; et
suppression de l'horloge décalée sélectionnée et d'une valeur de décalage de temps associée à l'horloge décalée sélectionnée (S5314).

15. Un module de mise en oeuvre d'une horloge (120) pour un terminal mobile (100), comprenant :
une horloge de référence (122) pour la génération d'un signal de temps de référence utilisant une horloge interne ;
un gestionnaire de données de décalage (124) pour gérer au moins une valeur de décalage de temps dérivée par utilisation du signal de temps de référence et d'une valeur d'écart de temps introduite par un utilisateur, et pour sélectionner une horloge décalée ;
une unité d'affichage (150) pour l'affichage d'une liste d'horloges des horloges décalées existantes et du temps de l'horloge décalée sélectionnée ;
une section d'horloge décalée (126) pour la création et la mise en oeuvre d'au moins une horloge décalée par utilisation de la au moins une valeur de décalage de temps, et pour la délivrance à l'utilisateur de toutes les options suivantes, selon la requête de réglage d'horloge introduite par l'utilisateur : affichage du temps de l'horloge décalée sélectionnée ; recalage de l'horloge décalée sélectionnée ; et suppression de l'horloge décalée sélectionnée.

16. Le module de mise en oeuvre d'horloge (120) de la revendication 15, dans lequel le signal de temps de référence provenant de l'horloge de référence (122) est inaltérable.

17. Le module de mise en oeuvre d'horloge (120) de la revendication 15, dans lequel la section d'horloge décalée (126) gère au moins une horloge décalée en fonctionnement constant.

18. Le module de mise en oeuvre d'horloge (120) de la revendication 17, dans lequel la au moins une horloge décalée en fonctionnement constant comprend une horloge standard (127) pour garder une trace du temps courant.

19. Le module de mise en oeuvre d'horloge (120) de la revendication 17, dans lequel la au moins une horloge décalée en fonctionnement constant comprend une horloge pour la gestion de droits numériques.

20. Le module de mise en oeuvre d'horloge (120) de la revendication 19, dans lequel l'horloge de gestion des droits numériques possède une clé de cryptage interne pour l'authentification et est recalable seulement lorsqu'une clé de cryptage délivrée de l'extérieur coïncide avec la clé de cryptage interne.
